Europäisches Patentamt

European Patent Office

Office européen des brevets

(19)

(11) Publication number: **0 018 158**
**B1**

(12) EUROPEAN PATENT SPECIFICATION

(45) Date of publication of patent specification: **26.01.83**

(51) Int. Cl.³: **H 02 G 1/12**

(21) Application number: **80301122.0**

(22) Date of filing: **09.04.80**

(54) Cable stripper.

(30) Priority: **21.04.79 GB 7913948**

(43) Date of publication of application:
**29.10.80 Bulletin 80/22**

(45) Publication of the grant of the patent:
**26.01.83 Bulletin 83/4**

(84) Designated Contracting States:
**DE FR GB NL SE**

(56) References cited:
**DE - A - 2 523 148**
**GB - A - 611 822**
**GB - A - 1 102 808**
**US - A - 2 738 479**

(73) Proprietor: **Bieganski, Zdzislaw**
**Timber Lane**
**Woburn Bedfordshire (GB)**

(72) Inventor: **Bieganski, Zdzislaw**
**Timber Lane**
**Woburn Bedfordshire (GB)**

(74) Representative: **Hands, Horace Geoffrey et al,**
**GEORGE FUERY & CO Whitehall Chambers 23**
**Colmore Row**
**Birmingham B3 2BL (GB)**

Cable stripper

This invention relates to a wire stripper, i.e. a tool for use in stripping the sheathing from an electrical conductor by making a peripheral slit in the sheathing and moving the tool axially relative to the conductor so as to sever and remove a portion of the sheathing.

British patent GB—A—611822 provides a simple tool for this purpose in which a pair of cutting blades are mounted on respective body parts which can be moved towards one another against spring loading so that Vee shaped cutting edges cooperate to make a diamond shaped aperture which is reduced in dimensions as the body parts approach one another. The minimum size of the aperture, and hence the depth of cut into a predetermined cable is fixed due to the construction employed.

But to avoid damage to the sheathed elements of the cable during stripping, it is important to cut or slit the sheathing to the correct depth, and effectively a tool according to GB—A—611822 would have to be made in a range of sizes each of which could only cope with a single cable.

In British patent GB—A—1102808, a tool similar to that in the previously mentioned British Patent has a screw adjustable stop so that the depth of cuts can be varied and set. Where a large number of cables all of the same size are involved, this tool may be useful, but it is less useful where the cable is of the co-axial type, requiring a series of cuts to different depths or where there is a range of different sizes of cable, because the tool has to be adjusted on every occasion of use.

German DE—A—2523148 proposes a tool which has plier like parts, one of which carries a plurality of cutters which can be individually adjusted to different depths, and which can all be adjusted relative to one another to vary the positions of the cuts axially along the cable (within narrow limits) and which is intended for coaxial cables. Whilst this tool avoids the necessity for adjustment between carrying out the separate cuts on a co-axial cable, it is unsuitable for ordinary cables.

All of the mentioned tools may be unsatisfactory in performing any stripping operation in that efficient and complete stripping is accomplished only when a cut of precise depth can be ensured. Thus, if the spring resistance in the tool of GB—A—611822 is not entirely overcome, the cuts will be incomplete. If the two parts are not moved together against the stop in the tool of GB—A—1102808 the same applies. If the pliers are not fully closed together in the tool of DE—A—2523148, the same applies.

The object of the invention is to provide a simple and relatively inexpensive tool for stripping cables, suitable for use with a range of difference cable sizes or with co-axial cables, and which overcomes these problems.

According to the invention a tool for stripping cables comprises a body formed with at least one aperture, a blade carrier which is movable relative to the body towards and away from the aperture, a stop limiting travel of the carrier in the direction towards the aperture, at least one blade extending across the aperture, and means connecting the blade to the carrier for adjusting their relative positions so that when a cable extends through said aperture and the carrier is against the stop the depth of cut of the blade into the cable depends upon the said adjustment means, and is characterised in that said carrier is urged by spring means in the direction which takes the blade towards and across the aperture.

Hence the invention avoids the use of parts which have to be closed together to embrace the cable, since instead of two movable parts there is one body with an aperture for the cable. Instead of relying on manual closing or relying upon overcoming a spring to move parts against a stop, the invention uses a spring to drive the cutter, and hence complete stripping becomes more likely, and the problem of providing efficient stripping in such a tool is solved.

Preferably a plurality of apertures is provided in the body, with the same number of blades as apertures, each blade being associated with separate connection means whereby a plurality of depth of cut settings can be maintained. This enables each aperture to be used with a different cable size, so that a range of cables can be dealt with without interfering with the settings, or it enables the different depth cuts with co-axial cable to be made and again without interfering with the other settings. Moreover, when so used with co-axial cables, it enables the axial separation of the cuts to be selected without limit.

In the presently preferred embodiment, the tool body is in the form of a housing in which the carrier is slidably mounted and the housing and carrier are formed with holes to enable the user to withdraw the carrier from its limiting position by inserting his finger through the holes and retracting the carrier. The holes in the housing may for example be pyriforme with their major axes extending in the direction of movement of the carrier and the hole in the carrier may be circular.

One example of the invention will now be described with reference to the embodiment shown in the accompanying drawings, in which:—

Figure 1 is a front view of a tool for stripping co-axial cables;

Figure 2 is a side view of the tool; and

Figure 3 is a view similar to Figure 1 but with part of the tool housing removed to show the internal construction of the tool more clearly.

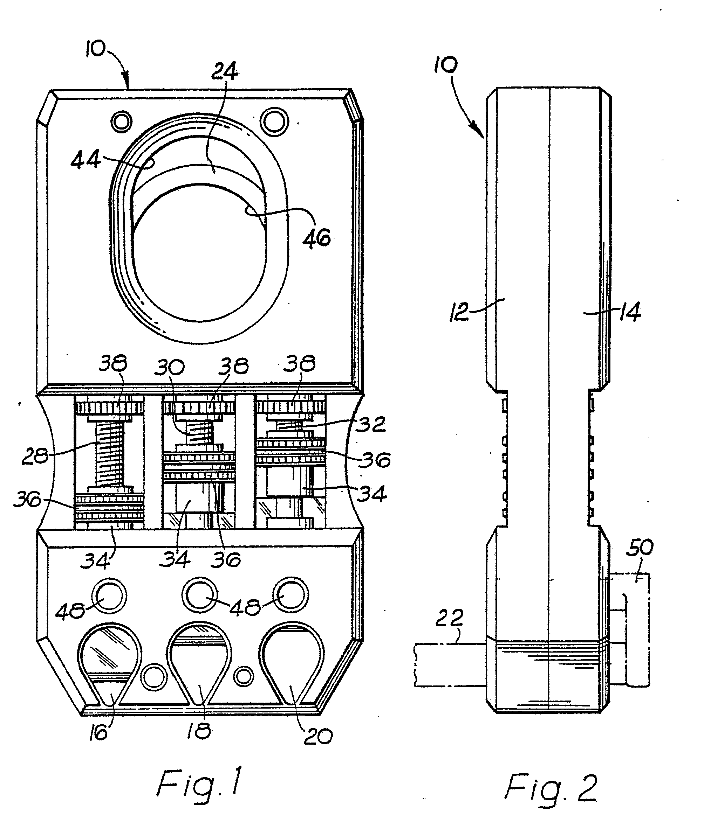

Referring now to the drawings, the tool comprises a housing 10 consisting of two tray-like halves 12, 14. Adjacent one end, each housing portion 12, 14 is formed with three apertures 16, 18 and 20 aligned one with each of the corresponding apertures in the other housing portion so that a cable 22 can be inserted through any one pair of registering apertures in the manner indicated in Figure 2. The apertures 16, 18 and 20 are of a tapering configuration for reasons that will become apparent subsequently and, in the embodiment illustrated, each aperture comprises a semicircular portion and a V-shaped portion, the apices of the V's being located closest to the adjacent end of the housing. The margins of the apertures 16, 18 and 20 may be formed with flanges which project inwardly of the housing so as to provide extended support for the cable.

A blade carrier 24 is mounted within the housing 10 for sliding movement lengthwise of the housing towards and away from the apertures 16, 18 and 20. The blade-carrier is limited in its movement towards the apertures 16, 18 and 20 by suitable stop means, for example internal shoulders 26 within the housing, and is biassed towards this limiting position by springs 27. The carrier 24 is formed with a number of internally threaded bores which receive respective screw-threaded rods 28, 30 and 32. The rods 28, 30 and 32 extend lengthwise of the housing towards respective ones of the apertures 16, 18 and 20 and terminate in portions 34 which are rotatably connected with the rods 28, 30 and 32 and are provided with knurled sections 36 by means of which the rods 28, 30 and 32 can be adjusted relative to the carrier 24 in the lengthwise direction. Lock nuts 38 are also provided for securing the rods in a selected position of adjustment, the lock nuts 38 also including knurled sections to aid manipulation thereof. In the area of the lock nut 38 and the knurled sections 36 of portions 34, the housing portions 12, 14 are cut away to allow the user access to these components for the purposes of adjustment.

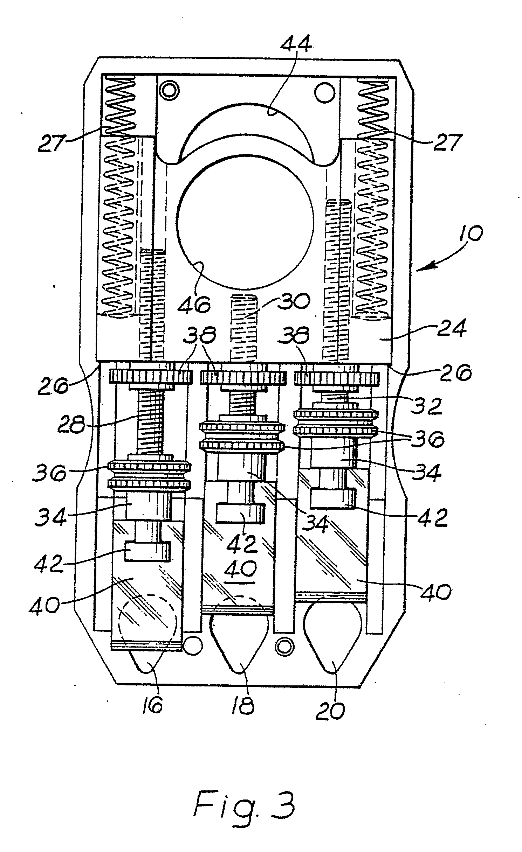

The portions 34 are each connected to a respective blade 40 which are guided for sliding movement within the housing and are formed with generally T-shaped slots for reception of the heads 42 and portions 34. Thus, when the rods 28, 30 and 32 are adjusted in the lengthwise direction, the blades 40 undergo corresponding adjustments and it will be understood from Figure 3 that the extent to which the blades 40 encroach upon the apertures 16, 18 and 20 can be varied by appropriate adjustment of the rods 28, 30 and 32. To enable the blade-carrier 24 to be retracted from its limiting position as shown in Figure 3, the housing portions 12, 14 are formed with slots 44 and the carrier 24 is formed with an opening 46 so that the user can effect retraction of the blade-carrier by inserting the finger through the holes 44 and 46 and pulling the carrier in the appropriate direction. During this action, the extent to which the blades 40 encroach upon the apertures 16, 18 and 20 is reduced to facilitate insertion of the cable.

Adjacent each of the apertures 16, 18 and 20, the housing portion 14 is formed with apertures 48 forming sockets for reception of spigot portions of L-shaped stop elements 50 which can be arranged to overlie respective ones of the apertures 16, 18 and 20 to limit the extent to which the cable can be inserted through the housing and hence the length of sheath etc. that can be stripped. The stop elements will be made in a range of sizes so that the user can select the appropriate size for the length of sheath etc. to be stripped.

In operation, the blades 40 are set by means of adjustment of the rods 28, 30 and 32 so as to produce an incision of predetermined depth for given cable size. As shown in Figures 1 and 3, the blade 40 associated with aperture 20 is intended to produce an incision of predetermined depth into the outer sheathing of a co-axial cable, the blade 40 associated with aperture 18 is set to make an incision into the mesh-like conductor of the cable and the blade 40 associated with the aperture 16 is set to make an incision of predetermined depth into the sleeve surrounding the inner conductor of the cable. In practice, the carrier 24 is retracted to enable the cable to be inserted into aperture 20, the cable is inserted until it comes into abutment with the corresponding stop element, the carrier is released so that the blade associated with aperture 20 makes the required incision and the incision can then be extended around the complete periphery of the cable by rotating the tool about the cable while the cable end is maintained in abutment with the corresponding stop element 50. The outer sheathing is then removed by pulling the tool axially of the cable and after removal of the outer sheathing, the same procedure can be carried out for the remaining elements of the cable which are to be stripped, the subsequent operations being carried out using the apertures 18 and 16 respectively.

When a co-axial cable of different size is to be stripped, the settings of the blades are adjusted accordingly by releasing the lock nuts 38 and rotating the portions 34. It will be noted that the tapering configuration of the apertures 16, 18 and 20 caters for the differing diameters of the respective elements of a given size of co-axial cable.

Although the invention has been described above in relation to the stripping of co-axial cables, it will be appreciated that the tool can be used for other types of cable. For example, the tool will be particularly useful in instances where electrical assembly work involves stripping of a limited range of for example single conductor cables, each blade being set for the cutting of a different sized cable of the range.

## Claims

1. A tool for stripping cables comprising a body (10) formed with at least one aperture (16), a blade carrier (24) which is movable relative to the body towards and away from the aperture, a stop (26) limiting travel of the carrier in the direction towards the aperture, at least one blade (40) extending across the aperture, and means (28—38 and 42) connecting the blade to the carrier for adjusting their relative positions so that when a cable extends through said aperture and the carrier is against the stop the depth of cut of the blade into the cable depends upon the said adjustment means (28—38 and 42), characterised in that said carrier (24) is urged by spring means (27) in the direction which takes the blades towards and across the aperture.

2. A tool as claimed in Claim 1 wherein a plurality of apertures is provided, the same number of blades (16, 18, 20) as apertures, and each blade is associated with separate connection means (28—38 and 42) whereby a plurality of depth of cut settings may be maintained.

3. A tool as claimed in either preceding claim wherein the or each adjustment means comprises a screw having its head (34, 36, 42) rotatably coupled to the blade, and its shank (28, 30, 32) engaged in a threaded bore in the carrier.

4. A tool as claimed in any preceding claim arranged for manual operation and with additional apertures in the body (44) and carrier (46) allowing the carrier to be finger retracted.

5. A tool as claimed in any preceding claim wherein the said aperture(s) for the cable is pyriforme.

6. A tool as claimed in any preceding claim wherein a stop element (50) is provided and arranged to overlie the cable aperture to determine the position of the end of a cable located in said aperture and hence the location of a cut along the length of the cable.

## Patentansprüche

1. Kabel-Abisoliergerät, enthaltend einen mit wenigstens einer Öffnung (16) ausgebildeten Körper (10), einen relativ zum Körper in Richtung auf die Öffnung und von der Öffnung weg bewegbaren Klingenträger (24), einen die Bewegung des Trägers in Richtung auf die Öffnung begrenzenden Anschlag (26), wenigstens eine sich quer über die Öffnung erstreckende Klinge (40) sowie Einrichtungen (28 bis 38 und 42), die die Klinge mit dem Träger verbindet, zwecks Einstellung ihrer Relativstellungen, so daß, wenn sich ein Kabel durch die Öffnung erstreckt und der Träger am Anschlag anliegt, die Schneidtiefe der Klinge im Kabel von diesen Einstellungseinrichtungen (28 bis 38 und 42) abhängt, dadurch gekennzeichnet, daß der Träger (24) durch eine Federeinrichtung (27) in die Richtung gedrückt wird, die die Klingen in Richtung auf die Öffnung und quer dazu führt.

2. Gerät nach Anspruch 1, dadurch gekennzeichnet, daß eine Vielzahl von Öffnungen vorgesehen ist, die Anzahl der Klingen (16, 18, 20) gleich der der Öffnungen ist und daß jede Klinge einer gesonderten Verbindungseinrichtung (28 bis 38 und 42) zugeordnet ist, wodurch eine Vielzahl von Schneidtiefeneinstellungen aufrechterhalten werden kann.

3. Gerät nach einem der vorhergehenden Ansprüche dadurch gekennzeichnet, daß die oder jede Einstelleinrichtung eine Schraube aufweist, deren Kopf (34, 36, 42) drehbeweglich mit der Klinge verbunden ist und deren Schaft (28, 30, 32) in eine Gewindebohrung im Träger eingreift.

4. Gerät nach einem der vorhergehenden Ansprüche, dadurch gekennzeichnet, daß es für eine manuelle Betätigung sowie mit zusätzlichen Öffnungen im Körper (44) und Träger (46) ausgebildet ist, durch die der Träger mittels Finger zurückziehbar ist.

5. Gerät nach einem der vorhergehenden Ansprüche, dadurch gekennzeichnet, daß die genannte Öffnung (Öffnungen) für das Kabel birnenförmig ist.

6. Gerät nach einem der vorhergehenden Ansprüche, dadurch gekennzeichnet, daß ein Anschlagelement (50) vorgesehen sowie zur Überlagerung der Kabelöffnung ausgebildet und angeordnet ist, um die Position des Endes eines in der genannten Öffnung angeordneten Kabels und somit die Stelle eines Schnittes entlang der Länge des Kabels zu bestimmen.

## Revendications

1. Outil pour dénuder les câbles comprenant un corps (10) formé avec au moins une ouverture (16), un porte-lames (24) qui est mobile par rapport au corps vers l'ouverture et à l'écart de celle-ci, une butée (26) limitant la course du porte-lames dans le sens vers l'ouverture, au moins une lame (40) s'étendant à travers l'ouverture et un moyen (28—38 et 42) reliant la lame au porte-lames pour régler leurs positions relatives de façon que, quand un câble s'étend à travers ladite ouverture et que le porte-lames a été amené contre la butée, la profondeur de coupe de la lame dans le câble dépende dudit moyen de réglage (28—38 et 42), caractérisé en ce que ledit porte-lames (24) est rappelé par ressort (27) dans la direction qui amène les lames vers et à travers l'ouverture.

2. Outil selon la revendication 1, dans lequel sont ménagées plusieurs ouvertures (16, 18, 20) en nombre égal à celui des lames et dans lequel chaque lame est associée à un moyen de liaison séparé (28—38 et 42) de sorte que plusieurs réglages de profondeur de coupe peuvent être maintenus.

3. Outil selon l'une quelconque des revendications précédentes, dans lequel le moyen de réglage ou chaque moyen de réglage comprend une vis ayant sa tête (34, 36, 42) accouplée à la lame avec possibilité de rotation et sa tige (28, 30, 32) engagée dans un trou taraudé du porte-lames.

4. Outil selon l'une quelconque des revendications précédentes, disposé pour un actionnement manuel et avec des ouvertures supplémentaires dans le corps (44) et dans le porte-lames (46) permettant au porte-lames d'être tiré en arrière par un doigt.

5. Outil selon l'une quelconque des revendications précédentes, dans lequel ladite ou lesdites ouvertures pour le câble sont piriformes.

6. Outil selon l'une quelconque des revendications précédentes, dans lequel un élément de butée (50) est prévu et disposé pour recouvrir l'ouverture pour câble en déterminant la position de l'extrémité d'un câble placée dans ladite ouverture et par suite l'emplacement d'une coupe sur la longueur du câble.

Fig.1

Fig. 2

Fig. 3